# EUROPÄISCHE PATENTSCHRIFT

(11) **EP 0 503 463 B1**
(45) Veröffentlichungstag und Bekanntmachung des Hinweises auf die Patenterteilung: **22.02.1995**
(21) Anmeldenummer: 92103711.5
(22) Anmeldetag: 04.03.1992
(51) Int. Cl.: B29C 61/06, H02G 15/18

(54) **Verfahren zur Herstellung von schrumpfbaren Produkten und nach dem Verfahren hergestellte Produkte**
Process for the manufacture of shrinkable elements and elements manufactured with this process
Procédé de fabrication d'éléments thermorétractables et éléments obtenus par ce procédé

(30) Priorität: 15.03.1991 DE 4108570
(43) Veröffentlichungstag der Anmeldung: 16.09.1992
(73) Patentinhaber: RXS Schrumpftechnik-Garnituren GmbH, D-58093 Hagen (DE)
(72) Erfinder: Kipfelsberger, Christian, Dr.-Ing., W-8071 Hepberg (DE); Brudermann, Uwe, Dr.-Ing., W-5804 Herdecke (DE); Figge, Axel, Dipl.-Ing., W-5800 Hagen (DE); Selbach, Bernd, W-5880 Lüdenscheid (DE); Figge, Werner, W-5983 Balve 7 (DE)
(74) Vertreter: Fuchs, Franz-Josef, Dr.-Ing.

(56) Entgegenhaltungen:
- EP-A- 0 045 213
- EP-A- 0 137 648
- EP-A- 0 141 682
- WO-A-84/04572
- FR-A- 2 308 488

## Beschreibung

Verfahren zur Herstellung von schrumpfbaren Produkten und nach dem Verfahren hergestellte Produkte.

Die Erfindung betrifft ein Verfahren zur Herstellung von wärmeschrumpfbaren Produkten durch Anbringen einer Naht in einem durch Extrusion oder Spritzgießen hergestellten zylindrischen Grundprodukt aus schrumpfbarem Kunststoff, wobei das Grundprodukt vor oder nach dem Nähverfahren chemisch oder durch energiereiche Bestrahlung vernetzt und anschließend gereckt wird.

Aus der DE-OS 31 01 256 sind zylindrische und längsgeschlitzte Produkte aus schrumpfbarem Material bekannt, bei denen entlang ihrer Längskante Verschlußelemente in Form eines Klettverschlusses mit Hilfe von Fäden angenäht sind. Dadurch können die Herstellungsverfahren verbessert werden, da ein einfaches Band extrudiert werden kann, auf welches dann je nach Bedarf verschiedenste zusätzliche Verschlußelemente aufgebracht werden können. Jedoch kann dadurch die eigentliche Form des extrudierten plattenförmigen Gegenstandes nicht verändert werden.

Aus EP-A-0 137 648 ist ein schrumpfbarer Artikel aus einem schrumpfbaren Gewebe bekannt, bei dem mit Hilfe von Nähten mehrere Einzelteile zu einem neuen Produkt zusammengenäht werden.

Aus EP-A- 0 141 682 sind wärmeschrumpfbare Gegenstände bekannt, die aus zwei oder mehreren Einzelteilen mittels Nähte zusammengesetzt werden, wobei die Einzelteile zunächst aufeinander angepaßt werden müssen.

Aufgabe der Erfindung ist nun, ein Verfahren zu finden, nach dem ein in einfacher Weise herzustellendes Gebilde nachträglich so verändert werden kann, daß sich weitere Anwendungsmöglichkeiten erschließen. Die gestellte Aufgabe wird nun mit einem Verfahren der eingangs erläuterten Art dadurch gelöst, daß das Grundprodukt entlang zumindest eines Teils seiner Längsausdehnung so mit mindestens einer Naht versehen wird, daß zumindest eine der ursprünglichen Öffnungen in mehrere Öffnungen unterteilt wird.

Weiterhin besteht die Aufgabe, Gegenstände zu entwickeln, die nach dem erfindungsgemäßen Verfahren herstellbar sind. Diese Aufgabe wird durch Gegenstände gelöst, die nach den Merkmalen des Patentanspruchs 9 und folgende ausgebildet sind.

Die Vorteile der Erfindung sind in erster Linie darin zu sehen, daß das Verfahren zur Herstellung kompliziert geformter Gegenstände wesentlich vereinfacht werden kann, wenn zunächst einfache Formkörper zum Beispiel durch Extrusion oder durch Spritzgießen gefertigt werden, die dann in einfacher Weise zu neuen Körpern weiterbehandelt werden. Dadurch ist sogar möglich, daß die zunächst hergestellten Grundprodukte mit nachträglicher Zusatzbehandlung durch Anbringen von Nähten für weitere Anwendungsmöglichkeiten vorgesehen werden können. Diese Nähte können in Form von Abnähern, von Abtrennähten oder beliebiger Formen am Grundprodukt angebracht werden, wodurch dieses so umgestaltet wird, daß neue Funktionen erfüllt werden können. Als Beispiel hierfür ist eine einfache Muffe aus schrumpfbarem Material vorgesehen, die als Grundprodukt in Form von Durchgangsmuffen eingesetzt werden kann. Nach Anbringen einer Trennaht, die mindestens an einem Ausgang gegenüberliegende Wandungsteile des Grundproduktes zusammenfaßt, läßt sich die ursprüngliche Öffnung in weitere Öffnungen aufteilen, so daß dieses neue, durch die Naht veränderte Produkt als Abzweigmuffe oder als Aufteilungskappe verwendet werden kann. Bisher sind hierfür zusätzliche Bauteile in Form von Klammern nötig, die als Trennelemente eingesetzt werden müssen.

Derartige Gegenstände sind zusätzlich meist längsgeteilt, damit sie auch über ungeschnittene, langgestreckte Gegenstände wie zum Beispiel Kabel angeordnet werden können. Entlang eines solchen Längsschlitzes müssen jedoch entsprechende Längsverschlüsse angeordnet werden, die nach dem Umschließen des Gegenstandes miteinander in Eingriff gebracht werden. Nun ist weiterhin Gegenstand der Erfindung, daß zusätzlich zu den zuerst genannten Umformungen durch Nähte auch weitere Formteile an das Grundprodukt angebracht werden können, wie zum Beispiel Längsverschlüsse entlang von Trennungskanten des schrumpfbaren Produktes. Dies erleichtert wiederum die Herstellung der Grundprodukte, da nun bei diesen auch keine Profilierungen mehr angeformt werden müssen. Außerdem lassen sich durch derartige Verfahrensschritte auch verschiedene Materialien verwenden, die dann mit Hilfe von Nähten zusammengesetzt werden. Auf solche Weise lassen sich die Endprodukte optimal dem jeweils erforderlichen Verwendungszweck anpassen.

Die Erfindung betrifft also die Herstellung und Konfektionierung wärmeschrumpffähiger Produkte durch die Anwendung technischer Nähfäden. Ganz allgemein wird durch die Erfindung das Problem gelöst, die zeit- und kostenwendige Herstellung von kompliziert gestalteten Wärmeschrumpfprodukten zu vereinfachen. Zudem werden Möglichkeiten aufgezeigt, wie Wärmeschrumpfprodukte mit neuem Eigenschafts- und Anwendungsprofil durch die Anwendung von Nähten mit entsprechenden technischen Fäden hergestellt werden können. Von den technischen Fasern bzw. Fäden kommen dabei besonders jene zur Anwendung, die sich beim sogenannten Nähprozeß gut handhaben lassen. Diese Fäden zeichnen sich zum einen durch eine hohe Elastizität und Abriebfestigkeit und zum anderen durch eine hohe mechanische Festigkeit und vor allem hohe Temperaturbeständigkeit aus. Erfüllt werden diese Anforderungen insbesondere durch neuartige Fäden aus Glas, Glas-Polytetrafluorethylen-Kombinationen, Aramid, Kohlenstoff, Metall, Metall-Aramid-Kombinationen, Metall-Baumwoll-Kombinationen sowie durch sämtliche hochtemperaturbeständig ausgerüstete Fäden. Mit solchen Fäden und geeigneten Näheinrichtungen, wie zum Beispiel Schusternähmaschinen, lassen sich Wärmeschrumpfprodukte auch mit großen Wanddicken miteinander oder mit anderen nichtpolymeren Materialien vernähen. Die Temperaturbeständigkeit der Nähfäden muß so groß sein, daß bei Reck- und Schrumpftemperatur des schrumpfbaren Gegenstandes noch ausreichende Festigkeit gewährleistet sein muß. Die Elastizität der Nähfäden muß so sein, daß bei Reck -und Schrumpftemperatur des Produktes die Dichtigkeit bzw. Haltbarkeit der Nähte nicht beeinträchtigt wird. Die Abriebfestigkeit muß mindest so groß sein wie die des vernähten Produktes.

Weitere Vorteile liegen darin, daß nun sowohl die flächige Umhüllung als auch separate Profilelemente je nach Anwendung unterschiedlich chemisch oder mit Hilfe von energiereicher Bestrahlung vernetzt werden können.

Bisher ist die Herstellung von wärmeschrumpffähigen, einzelnen Formteilen, wie zum Beispiel Abzweigkörper, Kappen und dergleichen mit den heuzutage angewandten Verfahren sehr aufwendig. Diese Gegenstände lassen sich nun durch Abnähen von spritzgegossenen oder extrudierten Vorprodukten vor bzw. nach dem Vernetzen wesentlich einfacher herstellen. Hierbei sieht die Erfindung auch vor, daß das Abnähen sowohl vor oder auch nach dem Aufweitprozeß erfolgen kann.

Wärmeschrumpffähige, schlauchförmige und längsgeschlitzte Umhüllungen werden zum Beispiel in der Nachrichentechnik zum Zwecke der Umhüllung von Kabelspleißen und dergleichen bisher meist mit Hilfe metallischer Schienen verschlossen. Hierzu müssen die Randbereiche entlang der Längskanten der polymeren Umhüllung entsprechende Profilelemente aufweisen. Um das Herausgleiten der Profilelemente aus den Metallschienen bei Erwärmung zu verhindern, müssen diese jedoch mit sehr engen Toleranzen hergestellt werden. Dies stellt sehr hohe Anforderungen an die Extrusionstechnik, da die Profilelemente deutlich andere Extrusionswiderstände aufweisen als die restliche Umhüllung. So ist es verfahrenstechnisch wesentlich einfacher und auch wirtschaftlicher, diese Profile in einem speziellen Werkzeug zum Beispiel zu extrudieren und die Umhüllung selbst als Flachbahn separat herzustellen. Das Verbinden der Flachbahnen mit den Profilen könnte dann mit entsprechenden Fäden in zusätzlichen Nähten erreicht werden. Diese Verfahrensweise führt erfindungsgemäß zusätzlich zu einer Reihe von Vorteilen. Diese liegen zum Beispiel in einer einfacheren Extrusion der Profilelemente mit entsprechend einfacheren Werkzeugen. Des weiteren ist nun die Möglichkeit gegeben, unterschiedliche, thermoplastische oder elastomere Materialien für die Profilelemente und für die eigentliche Umhüllung verwenden zu können. Außerdem ist möglich, die Profilelemente so zu extrudieren oder im Spritzgußverfahren herzustellen, daß eine Metallschiene zum Verschließen sogar überflüssig wird, das heißt, daß sie eigenständig den Verschluß darstellen.

Außerdem können mit den angegebenen Fäden auch nichtpolymere, zum Beispiel metallische Verschlüsse bzw. Verschlußsysteme aufgenäht werden, so daß schließlich Metallschienen nicht mehr erforderlich sind.

Auch am Beispiel von wärmeschrumpffähigen Formteilen mit mehreren Ausgängen, zum Beispiel für die Starkstromtechnik, können die verfahrenstechnischen Vorteile genutzt werden. Die heutzutage angewandten Formteile in der Starkstromtechnik erfordern teilweise sehr komplizierte und aufwendige Herstellverfahren. Hierzu müssen neuere Spritzguß- und Aufweitwerkzeuge und zusätzliche Hilfsvorrichtungen eingesetzt werden. Diese Werkzeuge werden erfindungsgemäß wesentlich einfacher, wenn die Formteile beispielsweise in zwei Hälften gespritzt, vernetzt, aufgeweitet und anschließend im geweiteten Zustand miteinander vernäht werden, wobei ein Teil zum Beispiel als Grundprodukt mit einer Naht gemäß der Erfindung ausgebildet ist.

Außerdem lassen sich auch unterschiedliche Materialien verwenden, die zum Beispiel durch unterschiedliche Vernetzung voneinander abweichen. Außerdem ist eine einfache, lokal unabhängige Aufweitung und Montage der Einzelteile möglich, wenn erst dann der Nähprozeß durchgeführt wird.

Weiterhin lassen sich mit den genannten Fäden auch Wärmeschrumpfprodukte mit großen bzw. unterschiedlichen Wanddicken miteinander oder mit anderen nichtpolymeren Materialien vernähen. Dies gilt auch für unterschiedliche Polymere, zum Beispiel amorphe bzw. teilkristalline Materialien oder für unterschiedlich vernetzte Materialien.

Wenn bei längsgeschlitzten Umhüllungen zum Verschließen des Längsschlitzes mit einer Metallschiene die erforderlichen polymeren Profilelemente separat hergestellt werden, können diese vor, aber auch vor allem nach dem Recken des Grundproduktes aufgenäht werden.

Zur Herstellung von separaten Verschlußelementen eignen sich auch nichtpolymere Materialien wie zum Beispiel Metalle und dergleichen.

Die spritzgegossenen oder extrudierten Verschlußelemente können auch aus einem anderen, vom Material des Grundproduktes unterschiedlichen, jedoch vernetzten oder nicht vernetzten polymeren Material hergestellt werden. Solche spritzgegossenen oder extrudierten Formteile und dergleichen können vor bzw. nach dem Vernetzen und vor bzw. nach dem Aufweiten festgelegt werden. Dies gilt auch für das Anbringen der formverändernden Naht im Grundprodukt.

Im Bereich der Nähte können zusätzlich auch Haftvermittler, Klebstoffe, Peroxidbänder und dergleichen angebracht werden, durch die eine dichte Verbindung der Nähkanten erreicht wird.

Die Erfindung wird nun anhand von elf Figuren näher erläutert.
- Figur 1: zeigt ein Grundprodukt, das mit einer Naht zur Teilung der Öffnung versehen ist.
- Figur 2: zeigt das Ausführungsbeispiel nach Figur 1 mit einem Trennschnitt im Nahtbereich.
- Figur 3: verdeutlicht die Herstellung eines wärmeschrumpfbaren Produktes nach den Figuren 1 und 2.
- Figur 4: zeigt einen ersten aufgenähten Längsverschluß.
- Figur 5: zeigt einen zweiten aufgenähten Längsverschluß.
- Figur 6: zeigt einen dritten aufgenähten Längsverschluß.
- Figur 7: zeigt einen vierten aufgenähten Längsverschluß.
- Figur 8: zeigt einen fünften aufgenähten Längsverschluß.
- Figur 9: zeigt einen sechsten aufgenähten Längsverschluß.
- Figur 10: zeigt einen siebten aufgenähten Längsverschluß.
- Figur 11: zeigt ein Grundprodukt mit einem aufgenähten Verteilerstück.

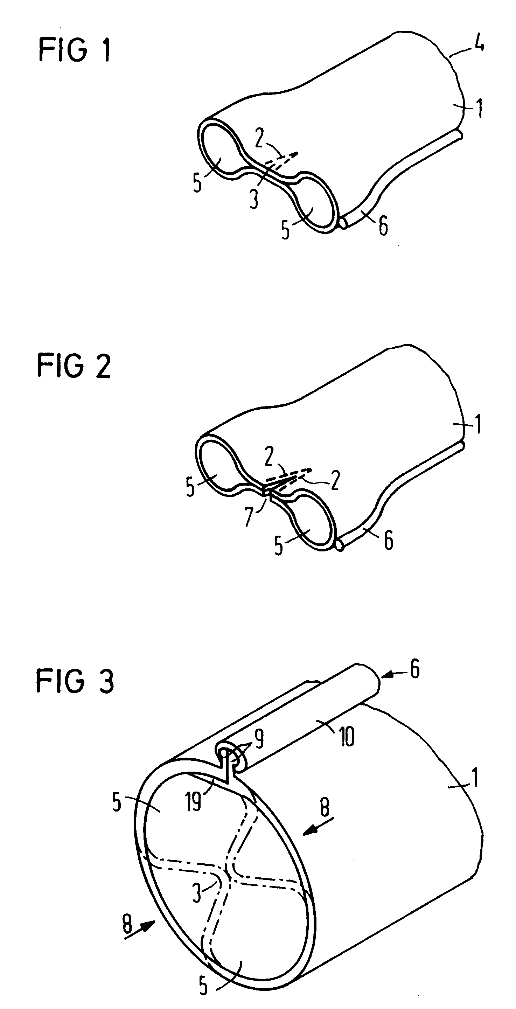

Die Figur 1 zeigt eine Naht 2, die gemäß der Erfindung so an dem ursprünglich rein zylindrischen und schrumpfbaren Grundprodukt 1 angebracht ist, daß das Grundprodukt formverändert ist und daß es auch einem weitergehenden Zweck zugeführt werden kann. Nun kann nämlich dieses formveränderte Grundprodukt 1 als Verzweigungsobjekt verwendet werden, wobei in diesem Fall durch das Annähen einer Naht 2 mit den bereits angegebenen Fäden aus der ursprünglichen großen Öffnung 4 zwei parallel liegende kleinere Öffnungen 5 gebildet worden sind. So ist nunmehr keinerlei Zusatzbauteil wie zum Beispiel eine Klammer nötig, um die gegenüberliegenden Wandungen des Grundproduktes 1 zusammenzuhalten. Außerdem ist hier im Prinzip angedeutet, daß das Grundprodukt 1 längsgeteilt ist und mit Hilfe eines Längsverschlusses 6 dichtend zusammengehalten werden kann. Einzelheiten hierüber werden in den folgenden Figuren 3 bis 10 näher erläutert.

Die Figur 2 verdeutlicht, daß weitere Maßnahmen am Grundprodukt 1 getroffen werden können. So ist hier zum Beispiel zwischen der U- oder keilförmig angelegten Naht 2 ein Einschnitt 7 gemacht worden, um die Abzweigung bei Bedarf besser spreizen zu können.

In Figur 3 wird das Verfahren angedeutet, das zur Bildung eines neuen Endproduktes durch Anlegen einer Naht in einem Grundprodukt 1 nach Figur 1 oder 2 führt. Durch die beiden Pfeile 8 wird angedeutet, daß die gegenüber liegenden Wandungen des Grundproduktes 1 bis zur gegenseitigen Berührung im Mittelbereich 3 zusammengedrückt werden, wie die punktierte Skizze zeigt. Dadurch werden die beiden Zweigöffnungen 5 gebildet. Anschließend wird die Naht eingebracht. Außerdem ist hier ein Längsverschluß 6 gezeigt, der aus zwei längsseitig verlaufenden Wülsten 9 und einer darüber aufgeschobenen Metallschiene 10 gebildet wird. Im Inneren wird ein Untertritt 19 über die Trennfuge hinweggeführt. Bei diesem Beispiel sind die beiden Verschlußteile in Form der längsseitigen Wülste 9 bereits von Anfang an am Grundprodukt 1 mit angeformt, was bei der Herstellung gewisse Probleme bezüglich der unterschiedlichen Extrusionskräfte aufwerfen könnte.

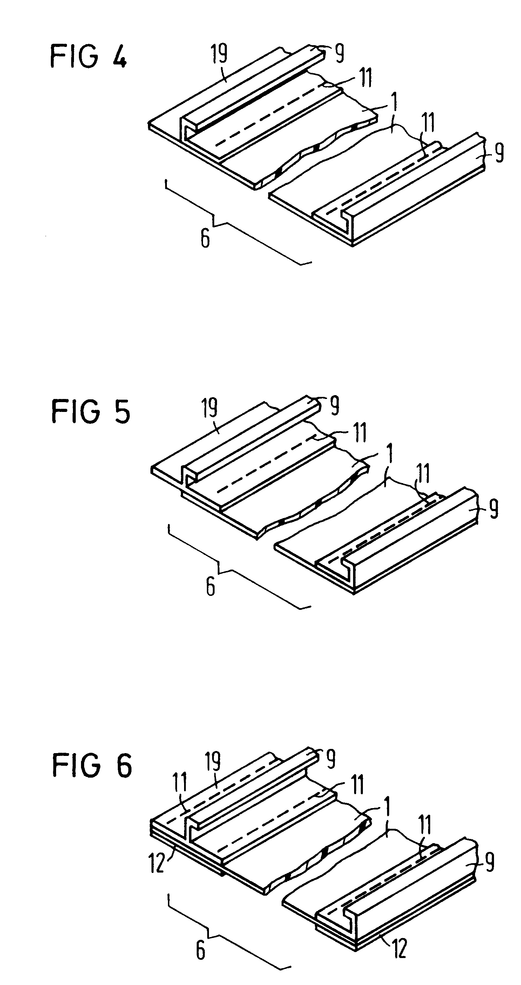

Die in den folgenden Figuren 4 bis 10 gezeigten Längsverschlüsse sind vom Grundprodukt 1 getrennt und werden nach einer weiteren erfindungsgemäßen Verbesserung mit Hilfe weiterer Nähte auf das Grundprodukt 1 aufgebracht. Dadurch ergeben sich bei der Herstellung des Grundproduktes 1 wie auch der separaten Verschlußelemente erhebliche Vorteile, da für jedes dieser Teile nun optimale Verdickungsverhältnisse zugrunde gelegt werden können. Außerdem läßt sich für jedes separate Teil optimal abgestimmtes Material verwenden. Dies ist eingangs bereits erläutert.

Figur 4 zeigt ein nach diesem Prinzip gefertigtes Endprodukt, das aus einer einfach zu fertigenden Platte als Grundprodukt 1 besteht, das keinerlei Profile mehr aufweist. In diesem Grundprodukt 1 können gemäß der Erfindung, wie auch bei den folgenden Ausführunsbeispielen, die formverändernden Nähte eingebracht werden. Zusätzlich werden nun die für das Verschlußsystem 6 benötigten, separat gefertigten Verschlußprofile 9 ebenfalls mit entsprechend geführten Nähten 11 aufgebracht, wobei die Verschlußprofile 9 mit Auflageflächen versehen sind.

Eines dieser Verschlußteile 9 ist nicht am äußersten Ende des Grundproduktes 1 angesetzt, so daß sich hierdurch gleichzeitig ein Untertritt 19 ergibt. Über die Verschlußprofile 9 wird eine Verschlußschiene nach dem Umlegen um das zu schützende Objekt aufgezogen.

Die Figur 5 zeigt ein Ausführungsbeispiel, bei dem der Untertritt 19 an eines der Verschlußprofile 9 angeformt ist. Im übrigen liegen die Verhältnisse nach Figur 4 vor.

Die Figur 6 zeigt ein Ausführungsbeispiel, bei dem die Verschlußprofile 9 mit Gegenplatten 12 zusammen vernäht werden, wobei die Verschlußprofile 9 auf der einen Seite des Grundproduktes 1 und die Gegenplatten 12 auf der anderen Seite des Grundproduktes 1 angeordnet sind. Dadurch wird die Festigkeit im Verschlußbereich erhöht.

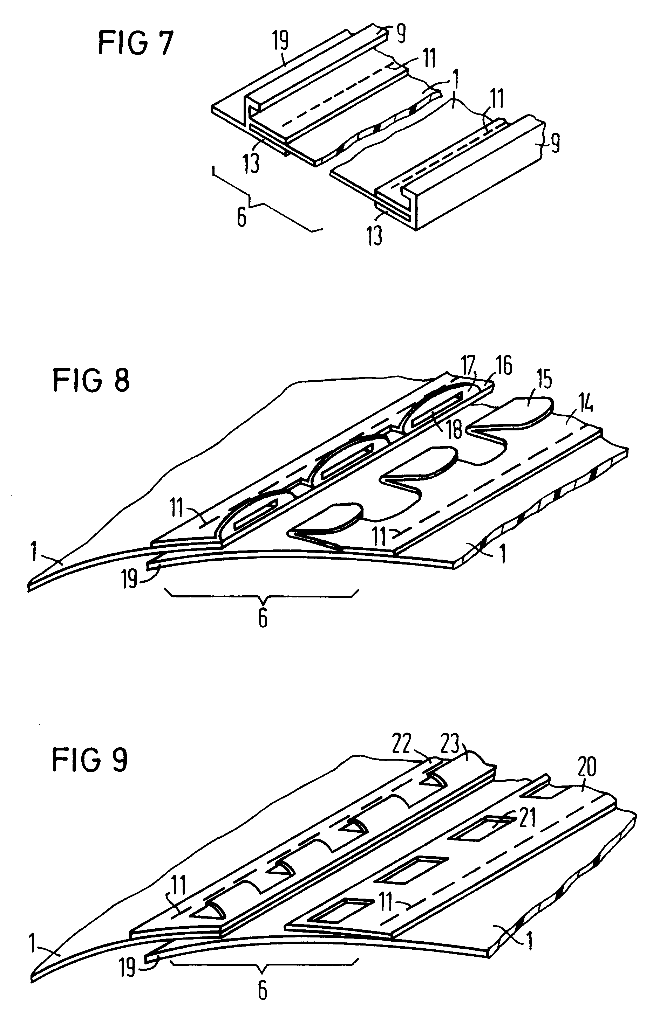

Die Figur 7 zeigt ein Ausführungsbeispiel mit Verschlußprofilen 9, die jeweils eine längsverlaufende Nut 13 aufweisen, in die das Grundprodukt 1 jeweils in seiner vollen Länge eingeführt und mit den Verschlußprofilen 9 vernäht wird. Dadurch ergibt sich ebenfalls eine doppelseitige Umfassung des Grundproduktes 1 im Verschlußbereich.

Die Figur 8 zeigt ein Ausführungsbeispiel, bei dem der Längsverschluß 6 aus gegenseitigen Verhakungselementen gebildet wird, so daß sich das zusätzliche Bauteil in Form einer Verschlußschiene erübrigt. Hier besteht die eine Seite des Verschlußsystems 6 aus einer Reihe von Verschlußelementen, die als umgebogene Laschen 15 ausgebildet sind und die an einem Band 14 angeordnet sind und mit diesem auf das Grundprodukt 1 aufgenäht sind. Die zweite Seite des Längsverschlusses 6 besteht ebenfalls aus einem Band 16, in dem Öffnungen 18 angeordnet sind. Beim Verschließen werden die umgebogenen Laschen 15 in die korrespondierenden Öffnungen 18 verhakend eingeschoben. Ein innerer Untertritt 19 überdeckt den Verschlußbereich.

Die Figur 9 zeigt ebenfalls als Längsverschluß 6 gegenseitig einrastende Verschlußelemente 21 und 23, die wiederum in bzw. an längsverlaufenden Bändern 20 bzw. 22 mit Nähten 11 auf dem Grundprodukt 1 befestigt sind. Dabei ist das Band 20 so angeordnet, daß sich gleichzeitig ein Untertritt 19 ausbildet. Die Verschlußelemente 21 sind als Längsöffnungen ausgeführt, die in entsprechend gestaltete hakenförmige Verschlußelemente 23 des zweiten Bandes 22 eingehakt werden.

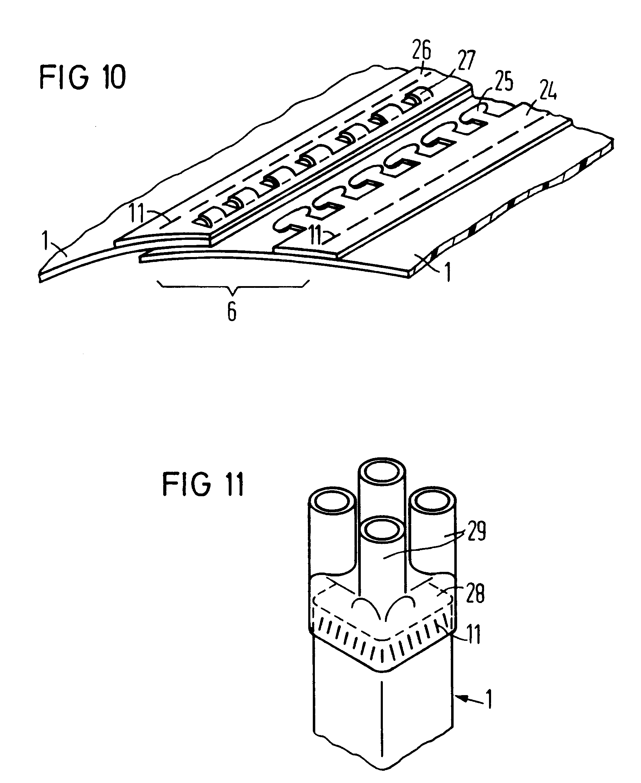

Die Figur 10 zeigt ebenfalls einen Längsverschluß 6 mit Verhakungselementen 25 und 27 entlang von aufgesetzten Bändern 24 bzw. 26, die ineinander eingehakt werden. Die Befestigung erfolgt ebenfalls mit Nähten 11.

Schließlich zeigt die Figur 11 ein Ausführungsbeispiel, bei dem an das Grundprodukt 1 mit Hilfe einer Naht 11 ein Formteil 28 angenäht wird. Hierdurch wird der erweiterte Einsatzbereich deutlich, der sich durch zusätzliche Befestigungsmöglichkeiten mit Hilfe von Nähten ergibt; denn das Formteil 28 ist ein kompliziert herzustellendes Verzweigungselement mit vier Verzweigungsausgängen 29, das ein völlig anderes Herstellungswerkzeug erfordert als das Grundprodukt 1. Es wird also deutlich, daß dadurch neue und wirtschaftlichere Herstellungsmethoden erschlossen werden können.

Wie bereits erwähnt, lassen sich in allen Nahtbereichen entsprechende, dichtende Mittel, wie Kleber oder ähnliches einbringen. Außerdem besteht zum Beispiel die Möglichkeit, durch Einlegen eines Peroxidbandes eine Vernetzung in diesem Nahtbereich einzuleiten.

## Patentansprüche

1. Verfahren zur Herstellung von wärmeschrumpfbaren Produkten durch Anbringen einer Naht in einem durch Extrusion oder Spritzgießen hergestellten zylindrischen Grundprodukt aus schrumpfbarem Kunststoff, wobei das Grundprodukt (1) vor oder nach dem Nähverfahren chemisch oder durch energiereiche Bestrahlung vernetzt und anschließend gereckt wird,
**dadurch gekennzeichnet,**
daß das Grundprodukt (1) entlang zumindest eines Teils seiner Längsausdehnung so mit mindestens einer Naht (2) versehen wird, daß zumindest eine der ursprünglichen Öffnungen (4) in mehrere Öffnungen (5) unterteilt wird.

2. Verfahren nach Anspruch 1,
**dadurch gekennzeichnet,**
daß die Naht (2) als Abnäher eingebracht wird.

3. Verfahren nach Anspruch 1,
**dadurch gekennzeichnet,**
daß die Naht (2) als Trennaht eingebracht wird.

4. Verfahren nach einem der vorhergehenden Ansprüche,
**dadurch gekennzeichnet,**
daß die Naht (2) mit an sich bekannten Nähvorrichtungen, insbesondere mit Schusternähmaschinen, in das wärmeschrumpfbare Grundprodukt (1) eingebracht wird.

5. Verfahren nach einem der vorhergehenden Ansprüche,
**dadurch gekennzeichnet,**
daß für das Anbringen der Naht (2) ein technischer, hochtemperaturbeständiger Nähfaden mit hoher Elastizität und Abriebfestigkeit verwendet wird.

6. Verfahren nach einem der vorhergehenden Ansprüche,
**dadurch gekennzeichnet,**
daß das mit mindestens einer Naht (2) veränderte Grundprodukt (1) mit zusätzlichen Formteilen (6, 28) konfektioniert wird, vorzugsweise durch An- oder Aufnähen.

7. Verfahren nach einem der vorhergehenden Ansprüche,
**dadurch gekennzeichnet,**
daß Haftvermittler und/oder sonstige Zusätze, vorzugsweise Peroxidbänder, im Bereich der Nähte (2, 11) zusätzlich angebracht werden.

8. Verfahren nach einem der vorhergehenden Ansprüche,
**dadurch gekennzeichnet,**
daß die Naht (2) als U- oder keilförmiger Abnäher angebracht wird.

9. Wärmeschrumpfbares Endprodukt, hergestellt mit dem Verfahren nach einem der Ansprüpche 1 - 8,
**dadurch gekennzeichnet,**
daß ein zylindrisches Grundprodukt (1) längsgeschlitzt und mit einem Längsverschluß (6) entlang der Längskanten versehen ist und daß eine Naht (2) mit einem Nähfaden längsseitig so angeordnet ist, daß zumindest eine Stirnseite des Grundproduktes (1) in mindestens zwei Öffnungen (5) unterteilt ist.

10. Wärmeschrumpfbares Endprodukt nach Anspruch 9,
**dadurch gekennzeichnet,**
daß der technische Nähfaden für die Nähte (2, 11) aus Glas besteht.

11. Wärmeschrumpfbares Endprodukt nach Anspruch 9,
**dadurch gekennzeichnet,**
daß der technische Nähfaden für die Nähte (2, 11) aus Glas-Polytetrafluorethylen-Kombinationen besteht.

12. Wärmeschrumpfbares Endprodukt nach Anspruch 9,
**dadurch gekennzeichnet,**
daß der technische Nähfaden für die Nähte (2, 11) aus Aramid besteht.

13. Wärmeschrumpfbares Endprodukt nach Anspruch 9,
**dadurch gekennzeichnet,**
daß der technische Nähfaden für die Nähte (2, 11) aus Kohlenstoff besteht.

14. Wärmeschrumpfbares Endprodukt nach Anspruch 9,
**dadurch gekennzeichnet,**
daß der technische Nähfaden für die Nähte (2, 11) aus Metall besteht.

15. Wärmeschrumpfbares Endprodukt nach Anspruch 9,
**dadurch gekennzeichnet,**
daß der technische Nähfaden für die Nähte (2, 11) aus Metall-Aramid-Kombinationen besteht.

16. Wärmeschrumpfbares Endprodukt nach Anspruch 9,
**dadurch gekennzeichnet,**
daß der technische Nähfaden für die Nähte (2, 11) aus Metall-Baumwoll-Kombinationen besteht.

17. Wärmeschrumpfbares Endprodukt nach Anspruch 9,
**dadurch gekennzeichnet,**
daß der Nähfaden hochtemperaturbeständig ist, das heißt bei mindestens Reck- oder Schrumpftemperatur des vernähten Materials noch ausreichende mechanische Stabilität aufweist.

18. Wärmeschrumpfbares Endprodukt nach Anspruch 9,
**dadurch gekennzeichnet,**
daß der Nähfaden eine Elastizität aufweist, die es gestattet, das vernähte Produkt den nötigen Reck- bzw. Schrumpfprozessen zu unterwerfen, ohne daß die Dichtigkeit bzw. Haltbarkeit der Nähte beeinträchtigt wird.

19. Wärmeschrumpfbares Endprodukt nach Anspruch 9,
**dadurch gekennzeichnet,**
daß der Nähfaden eine Abriebfestigkeit aufweist, die mindestens die Werte des vernähten Materials erreicht.

20. Wärmeschrumpfbares Endprodukt nach einem der Ansprüche 9 bis 19,
**dadurch gekennzeichnet,**
daß das Grundprodukt (1) im Nahtbereich unterschiedliche Wandstärken aufweist.

21. Wärmeschrumpfbares Endprodukt nach einem der Ansprüche 9 bis 20,
**dadurch gekennzeichnet,**
daß zusätzliche Formteile aus gleichem oder unterschiedlichem Material angenäht sind.

22. Wärmeschrumpfbares Endprodukt nach Anspruch 9,
**dadurch gekennzeichnet,**
daß die Verschlußelemente des Längsverschlusses (6) entlang der Längskante jeweils mit einer Naht (11) aufgebracht sind.

23. Wärmeschrumpfbares Endprodukt nach Anspruch 22,
**dadurch gekennzeichnet,**
daß die Verschlußelemente als Hakenelemente (15, 23, 25) und korrespondierende Rastelemente (17, 21, 27) ausgebildet sind.

24. Wärmeschrumpfbares Endprodukt nach Anspruch 22,
**dadurch gekennzeichnet,**
daß die Verschlußelemente als Wülste (9) ausgebildet sind, über die eine Verschlußschiene (10) schiebbar ist.

25. Wärmeschrumpfbares Endprodukt nach Anspruch 22,
**dadurch gekennzeichnet,**
daß die Verschlußelemente des Längsverschlusses (6) aus Metall bestehen.

26. Wärmeschrumpfbares Endprodukt nach Anspruch 22,
**dadurch gekennzeichnet,**
daß die Verschlußelemente des Längsverschlusses (6) aus polymerem Material bestehen.

27. Wärmeschrumpfbares Endprodukt nach einem der vorhergehenden Ansprüche 9 bis 26,
**dadurch gekennzeichnet,**
daß zusätzliche Dichtungsmittel, vorzugsweise Haftvermittler wie Klebstoffe, im Nahtbereich angeordnet sind.

28. Wärmeschrumpfbares Endprodukt nach einem der vorhergehenden Ansprüche 9 bis 26,
**dadurch gekennzeichnet,**
daß Peroxidbänder im Nahtbereich angeordnet sind.

## Claims

1. Process for manufacturing heat-shrinkable products by applying a seam in a cylindrical base product of shrinkable plastic produced by extrusion or injection moulding, the base product (1) being crosslinked chemically or by high-energy irradiation before or after the sewing process and subsequently stretched, characterized in that the base product (1) is provided along at least part of its longitudinal extent with at least one seam (2) in such a way that at least one of the original openings (4) is subdivided into a plurality of openings (5).

2. Process according to Claim 1, characterized in that the seam (2) is made as a dart.

3. Process according to Claim 1, characterized in that the seam (2) is made as a parting seam.

4. Process according to one of the preceding claims, characterized in that the seam (2) in made in the heat-shrinkable base product (1) by sewing devices known per se, in particular by shoemaker sewing machines.

5. Process according to one of the preceding claims, characterized in that a technical, high-temperature-resistant sewing thread having high elasticity and abrasion resistance is used for applying the seam (2).

6. Process according to one of the preceding claims, characterized in that the base product (1) modified by at least one seam (2) in fabricated with additional moulded parts (6, 28), preferably by sewing on.

7. Process according to one of the preceding claims, characterized in that adhesion promoters and/or other additives, preferably peroxide bands, are additionally applied in the region of the seams (2, 11).

8. Process according to one of the preceding claims, characterized in that the seam (2) is applied as a U-shaped or wedge-shaped dart.

9. Heat-shrinkable end product, manufactured by the process according to one of Claims 1-8, characterized in that a cylindrical base product (1) is longitudinally slit and is provided with a longitudinal closure (6) along the longitudinal edges and in that a seam (2) is arranged with a sewing thread longitudinally in such a way that at least one end face of the base product (1) is subdivided into at least two openings (5).

10. Heat-shrinkable end product according to Claim 9, characterized in that the technical sewing thread for the seams (2, 11) consists of glass.

11. Heat-shrinkable end product according to Claim 9, characterized in that the technical sewing thread for the seams (2, 11) consists of combinations of glass and polytetrafluoroethylene.

12. Heat-shrinkable end product according to Claim 9, characterized in that the technical sewing thread for the seams (2, 11) consists of aramid.

13. Heat-shrinkable end product according to Claim 9, characterized in that the technical sewing thread for the seams (2, 11) consists of carbon.

14. Heat-shrinkable end product according to Claim 9, characterized in that the technical sewing thread for the seams (2, 11) consists of metal.

15. Heat-shrinkable end product according to Claim 9, characterized in that the technical sewing thread for the seams (2, 11) consists of combinations of metal and aramid.

16. Heat-shrinkable end product according to Claim 9, characterized in that the technical sewing thread for the seams (2, 11) consists of combinations of metal and cotton.

17. Heat-shrinkable end product according to Claim 9, characterized in that the sewing thread in resistant to high temperature, that is to say has still adequate mechanical stability at least at the stretching or shrinking temperature of the sewn material.

18. Heat-shrinkable end product according to Claim 9, characterized in that the sewing thread has an elasticity which allows the sewn product to be subjected to the necessary stretching or shrinking processes without adversely affecting the tightness or durability of the seams.

19. Heat-shrinkable end product according to Claim 9, characterized in that the sewing thread has an abrasion resistance which reaches at least the values of the sewn material.

20. Heat shrinkable end product according to one of Claims 9 to 19, characterized in that the base product (1) has different wall thicknesses in the seam region.

21. Heat-shrinkable end product according to one of Claims 9 to 20, characterized in that additional moulded parts of the same or different material are sewn on.

22. Heat-shrinkable end product according to Claim 9, characterized in that the closure elements of the longitudinal closure (6) are applied along the longitudinal edge respectively by a seam (11).

23. Heat-shrinkable end product according to Claim 22, characterized in that the closure elements are designed as hook elements (15, 23, 25) and corresponding catch elements (17, 21, 27).

24. Heat-shrinkable end product according to Claim 22, characterized in that the closure elements are designed as beads (9), over which a closure rail (10) can be pushed.

25. Heat-shrinkable end product according to Claim 22, characterized in that the closure elements of the longitudinal closure (6) consist of metal.

26. Heat-shrinkable end product according to Claim 22, characterized in that the closure elements of the longitudinal closure (6) consist of polymeric material.

27. Heat-shrinkable end product according to one of the preceding Claims 9 to 26, characterized in that additional sealing agents, preferably adhesion promoters such an adhesives, are arranged in the seam region.

28. Heat-shrinkable end product according to one of the preceding Claims 9 to 26, characterized in that peroxide bands are arranged in the seam region.

## Revendications

1. Procédé de fabrication de produits thermorétractables par mise en place d'une couture dans un produit de base cylindrique en matière plastique rétractable fabriqué par extrusion ou moulage par injection, selon lequel le produit de base (1) est réticulé chimiquement ou par exposition à un rayonnement riche en énergie avant ou après le processus de couture, et ensuite étiré,
caractérisé en ce que, sur une partie au moins de son étendue longitudinale, le produit de base (1) est pourvu au moins d'une couture (2) de telle façon qu'au moins l'une des ouvertures d'origine (4) soit subdivisée en plusieurs ouvertures (5).

2. Procédé selon la revendication 1,
caractérisé en ce que la couture (2) est pratiquée sous la forme d'une pince.

3. Procédé selon la revendication 1,
caractérisé en ce que la couture (2) est pratiquée sous la forme d'une couture de séparation.

4. Procédé selon l'une quelconque des revendications précédentes,
caractérisé en ce que la couture (2) est pratiquée dans le produit de base thermorétractable (1) avec des dispositifs de couture connus, notamment avec des machines à coudre de cordonnier.

5. Procédé selon l'une quelconque des revendications précédentes,
caractérisé en ce que la couture (2) est pratiquée en utilisant un fil à coudre technique résistant aux hautes températures ayant une grande élasticité et une grande résistance à l'abrasion.

6. Procédé selon l'une quelconque des revendications précédentes,
caractérisé en ce que le produit de base (1), modifié par au moins une ceuture (2), est confectionné à l'aide d'éléments de forme complémentaires (6, 28), qui sont de préférence rapportés ou appliqués par couture.

7. Procédé selon l'une quelconque des revendications précédentes,
caractérisé en ce que des adhésifs et/ou d'autres additifs, de préférence des bandes en peroxyde, sont appliqués en supplément au niveau des coutures (2, 11).

8. Procédé selon l'une quelconque des revendications précédentes, caractérisé en ce que la couture (2) est pratiquée en tant que pince en forme de U ou de coin.

9. Produit fini thermorétractable fabriqué à l'aide du procédé selon l'une quelconque des revendications 1 à 8,
caractérisé en ce qu'un produit de base cylindrique (1) est fendu dans le sens longitudinal et pourvu d'une fermeture longitudinale (6) le long des bords longitudinaux, et en ce qu'une couture (2) est pratiquée à l'aide d'un fil à coudre sur le côté longitudinal, de telle façon qu'au moins l'une des faces frontales du produit de base (1) soit subdivisée en au moins deux ouvertures (5).

10. Produit fini thermorétractable selon la revendication 9,
caractérisé en ce que le fil à coudre technique des coutures (2, 11) est en verre.

11. Produit fini thermorétractable selon la revendication 9,
caractérisé en ce que le fil à coudre technique des coutures (2, 11) est constitué de combinaisons de polytétrafluoréthylène et de verre.

12. Produit fini thermorétractable selon la revendication 9,
caractérisé en ce que le fil à coudre technique des coutures (2, 11) est en aramide.

13. Produit fini thermorétractable selon la revendication 9,
caractérisé en ce que le fil à coudre technique des coutures (2, 11) est en carbone.

14. Produit fini thermorétractable selon la revendication 9,
caractérisé en ce que le fil à coudre technique des coutures (2, 11) est en métal.

15. Produit fini thermorétractable selon la revendication 9,
caractérisé en ce que le fil à coudre technique des coutures (2, 11) est constitué de combinaisons d'aramide et de métal.

16. Produit fini thermorétractable selon la revendication 9,
caractérisé en ce que le fil à coudre technique des coutures (2, 11) est constitué de combinaisons de métal et de coton.

17. Produit fini thermorétractable selon la revendication 9,
caractérisé en ce que le fil à coudre résiste aux hautes températures, à savoir qu'il présente encore une stabilité mécanique suffisante au moins à la température d'étirage ou de retrait de la matière cousue.

18. Produit fini thermorétractable selon la revendication 9,
caractérisé en ce que le fil à coudre a une élasticité qui permet de soumettre le produit cousu aux processus d'étirage ou de retrait nécessaires, sans porter atteinte à que l'étanchéité et à la solidité des coutures.

19. Produit fini thermorétractable selon la revendication 9,
caractérisé en ce que le fil à coudre a une résistance à l'abrasion qui atteint au moins les valeurs de la matière cousue.

20. Produit fini thermorétractable selon l'une quelconque des revendications 9 à 19,
caractérisé en ce qu'au niveau des coutures le produit de base (1) présente des épaisseurs différentes.

21. Produit fini thermorétractable selon l'une quelconque des revendications 9 à 20,
caractérisé en ce que des éléments de forme complémentaires en matières identiques ou différentes sont rapportés par couture.

22. Produit fini thermorétractable selon la revendication 9,
caractérisé en ce que chacun des éléments de fermeture de la fermeture longitudinale (6) située le long du bord longitudinal est appliqué par une couture (11).

23. Produit fini thermorétractable selon la revendication 22,
caractérisé en ce que les éléments de fermeture sont réalisés sous la forme d'éléments d'accrochage (15, 23, 25) et d'éléments d'encoche correspondants (17, 21, 27).

24. Produit fini thermorétractable selon la revendication 22,
caractérisé en ce que les éléments de fermeture sont réalisés sous la forme de bourrelets (9) au-dessus desquels peut être glissé un rail de fermeture (10).

25. Produit fini thermorétractable selon la revendication 22,
caractérisé en ce que les éléments de fermeture de la fermeture longitudinale (6) sont en métal.

26. Produit fini thermorétractable selon la revendication 22,
caractérisé en ce que les éléments de fermeture de la fermeture longitudinale (6) sont en matière polymère.

27. Produit fini thermorétractable selon l'une quelconque des revendications précédentes 9 à 26,
caractérisé en ce que des moyens d'étanchéité supplémentaires sont disposés au niveau des coutures, de préférence des adhésifs tels que des colles.

28. Produit fini thermorétractable selon l'une quelconque des revendications précédentes 9 à 26,
caractérisé en ce que des bandes en peroxyde sont disposées au niveau des coutures.
